# EUROPEAN PATENT SPECIFICATION

(11) **EP 3 514 033 B1**
(45) Date of publication and mention of the grant of the patent: **04.10.2023**
(21) Application number: 18187178.1
(22) Date of filing: 03.08.2018
(51) Int. Cl.: B60W 30/18, B60W 50/12, B60W 50/14

(54) **VEHICLE CONTROL DEVICE MOUNTED ON VEHICLE AND METHOD FOR CONTROLLING THE VEHICLE**
AUF EINEM FAHRZEUG MONTIERTE FAHRZEUGSTEUERUNGSVORRICHTUNG UND VERFAHREN ZUR STEUERUNG DES FAHRZEUGS
DISPOSITIF DE COMMANDE DE VÉHICULE EMBARQUÉ ET PROCÉDÉ DE COMMANDE DE VÉHICULE

(30) Priority: 18.01.2018 KR 20180006735
(43) Date of publication of application: 24.07.2019
(73) Proprietor: LG Electronics Inc., Seoul, 07336 (KR)
(72) Inventor: JUNG, Kyungjin, 06772 Seocho-gu, Seoul (KR); OK, Geunhyoung, 06772 Seocho-gu, Seoul (KR); LEE, Kihyung, 06772 Seocho-gu, Seoul (KR); HUR, In, 06772 Seocho-gu, Seoul (KR)
(74) Representative: Beyer, Andreas

(56) References cited:
- WO-A1-2017/017793
- WO-A1-2017/168013
- US-A1- 2016 272 199
- US-A1- 2017 334 460
- US-A1- 2017 336 788
- US-A1- 2017 361 853

## Description

### BACKGROUND OF THE INVENTION

### 1. Field of the Invention

The present invention relates to a vehicle control device provided in a vehicle and method for controlling the vehicle.

### 2. Background of the Invention

A vehicle is an apparatus capable of moving a user in the user-desired direction. Typically, a representative example may be a car.

Meanwhile, for convenience of a user using a vehicle, various types of sensors and electronic devices are provided in the vehicle. In particular, for the convenience of the user's driving, Advanced Driver Assistance System (ADAS) has been actively researched. In addition, an autonomous vehicle is actively under development. Meanwhile, as the development of the advanced driving assist system (ADAS) is actively undergoing in recent time, development of a technology for optimizing user's convenience and safety while driving a vehicle is required.

According to conventional autonomous driving technology, a lane is limitedly changed only in a specific situation such as driving along a preceding vehicle or changing directions. As a result, various changes in driving environments cannot be reflected. In addition, due to diversity of driving styles preferred by each driver, it may happen that an operation flow of an autonomous driving vehicle is desired to be changed. To this end, the driver's intention must be recognized but a system for this is insufficient.

US 2017/361853 A1 discloses a system for notifying a driver before an autonomous maneuver is performed by autonomous vehicles. The system includes displaying an overhead view to show a maneuver indicator and a driving condition indicator. The maneuver indicator indicates a lane change into the left lane and the driving condition indicator indicates an obstruction in front of the vehicle. An additional second maneuver indicator can be displayed to highlight the left lane.

US 2017/336788 A1 discloses supervisory control of vehicles. A computer system aboard the self-driving vehicle employs an algorithmic process to automatically generate a candidate trajectory set by eliminating trajectories in collision from feasible trajectories. For determining the candidate trajectory set, a world state including the current position or speed of the host vehicle is taken into account.

WO 2017/017793 A1 discloses a control method for smoothly changing lanes of a vehicle. The method includes determining whether a lane change is suitable in different traveling scenes according to different conditions. For example, in a scene of catching up with a preceding vehicle, the conditions "detection of the preceding vehicle ahead", "vehicle speed of preceding vehicle", "vehicle speed of own vehicle", and "arrival to the preceding vehicle" are taken into consideration.

US 2016/272199 A1 discloses a control device for reducing psychological discomfort that is experienced by a driver of a host vehicle due to a peripheral vehicle. The device assigns a potential field to each peripheral vehicle. The potential field conceptually represents the degree of psychological discomfort that is given to the driver of the host vehicle due to the presence of a peripheral vehicle. The device further defines a low potential field formed outside the range of the potential field. The potential field is determined by taking into account the speed of the host vehicle, the speed of the peripheral vehicle, or the weather.

### SUMMARY OF THE INVENTION

Therefore, an aspect of the detailed description is to solve the above-mentioned problems and other problems. Another aspect of the detailed description is to provide a vehicle control device capable of determining whether overtaking is available and guiding an overtaking available area, and a method for controlling the same.

To achieve these and other advantages and in accordance with the purpose of this specification, as embodied and broadly described herein, a vehicle control device according to the present invention for controlling a vehicle having a display is set out in claim 1.

In another embodiment, when the overtaking available area is selected, the processor may generate an autonomous driving command to proceed with overtaking to the overtaking available area.

In another embodiment, the processor may control the communication unit to provide guide information for proceeding with overtaking to the overtaking available area through the display.

In another embodiment, the guide information may include at least one of an overtaking start point, an overtaking path, an overtaking suggest speed, a movement distance in the case of overtaking, an overtaking start time, time required for overtaking, and an overtaking end point.

In another embodiment, when the vehicle is able to enter the overtaking available area in a first or second direction, the processor may control the communication unit to display a screen for selecting one of first and second directions on the display.

In another embodiment, when the overtaking restricted area is selected, the processor may control the communication unit to display the predetermined restriction condition on the display.

In another embodiment, when the overtaking unavailable area is selected, the processor may control the communication unit to display a notification setting screen for receiving a notification when overtaking becomes available in the overtaking unavailable area on the display.

In another embodiment, an object indicating a reason for overtaking unavailability may be displayed in the overtaking unavailable area.

In another embodiment, when a specific situation in which overtaking is impossible occurs as the vehicle changes its lane from a second lane to a first lane to enter the overtaking available area, the processor may generate a control command for the vehicle to return to the second lane.

In another embodiment, when another vehicle to overtake the vehicle is detected, the processor may control the communication unit to guide an estimated driving route of the other vehicle through the display.

In another embodiment, the processor may generate a control command for restricting movement of the vehicle so as not to overlap the estimated driving route of the other vehicle.

In another embodiment, a case where the predetermined condition is satisfied may include a case where a situation of deceleration or acceleration of the vehicle to a predetermined extent is detected.

In another embodiment, the case where the predetermined condition is satisfied may include a case where a predetermined input is received by an occupant of the vehicle.

In another embodiment, the processor may extract a driving route to the overtaking available area in consideration of conditions set by the driver of the vehicle in advance.

To achieve these and other advantages and in accordance with the purpose of this specification, as embodied and broadly described herein, a method according to the present invention for controlling a vehicle having a display is set out in claim 10. Further scope of applicability of the present application will become more apparent from the detailed description given hereinafter. However, it should be understood that the detailed description and specific examples are given to illustrate preferred embodiments of the invention. The scope of protection is defined by the appended claims.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating an appearance of a vehicle according to an embodiment of the present invention.
FIG. 2 is a view illustrating a vehicle at various angles outside a vehicle according to an embodiment of the present invention.
FIGS. 3 to 4 are views illustrating the interior of a vehicle according to the embodiment of the present invention.
FIGS. 5 to 6 are views referred to explain objects according to an embodiment of the present invention.
FIG. 7 is a block diagram referred to describe a vehicle according to an embodiment of the present invention.
FIG. 8 is a block diagram for explaining a vehicle control device according to the present invention.
FIG. 9 is a flowchart for explaining an embodiment of searching for a peripheral vehicle and determining whether or not the vehicle may be passed.
FIG. 10 is a conceptual diagram for explaining an embodiment in which a overtaking available area, an overtaking restricted area, and an overtaking unavailable area are displayed.
FIGS. 11 and 12 are conceptual diagrams for explaining an embodiment in which overtaking available areas are displayed to be different according to a driving mode.
FIG. 13 is a conceptual diagram for explaining an embodiment in which an overtaking available area is selected.
FIG. 14 is a conceptual diagram for explaining an embodiment in which an overtaking restricted area is selected.
FIG. 15 is a conceptual diagram for explaining an embodiment in which an overtaking unavailable area is selected.
FIG. 16 is a conceptual diagram for explaining an embodiment in which a notification setting screen for receiving a notification is output when overtaking is available.
FIG. 17 is a conceptual diagram for explaining an embodiment in which an icon indicating a reason why overtaking is unavailable is displayed.
FIG. 18 is a conceptual diagram for explaining an embodiment in which a reason for overtaking unavailability occurs during overtaking.
FIG. 19 is a conceptual diagram for explaining an embodiment in which another vehicle which attempts to overtake approaches.
FIGS. 20 to 22 are conceptual diagrams for explaining an embodiment in which a value for overtaking driving is set in advance.

### DETAILED DESCRIPTION OF THE INVENTION

Description will now be given in detail according to exemplary embodiments of the invention disclosed herein, with reference to the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present invention may be understood as a conception including cars, motorcycles and the like. Hereinafter, the vehicle will be described based on a car.

The vehicle according to the embodiment of the present invention may be a conception including all of an internal combustion engine car having an engine as a power source, a hybrid vehicle having an engine and an electric motor as power sources, an electric vehicle having an electric motor as a power source, and the like. In the following description, a left side of a vehicle refers to a left side in a driving direction of the vehicle, and a right side of the vehicle refers to a right side in the driving direction.

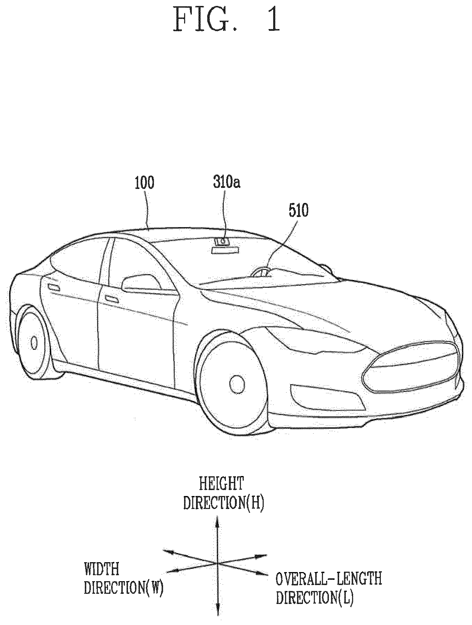

FIG. 1 is a view illustrating appearance of a vehicle in accordance with an embodiment of the present invention.

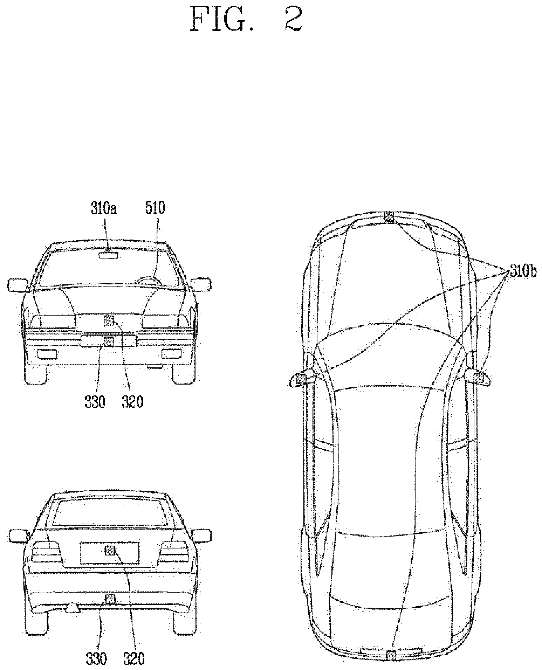

FIG. 2 is a view illustrating appearance of a vehicle at various angles in accordance with an embodiment of the present invention.

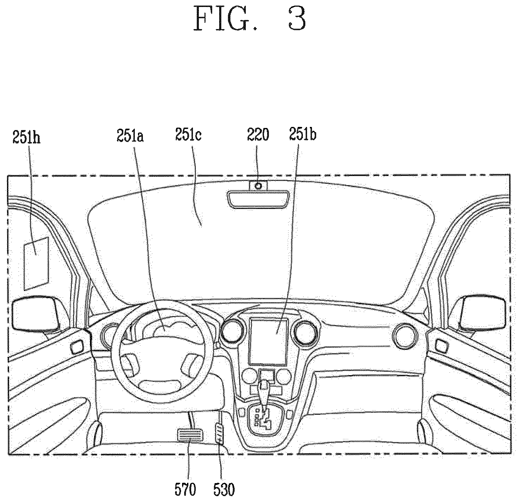

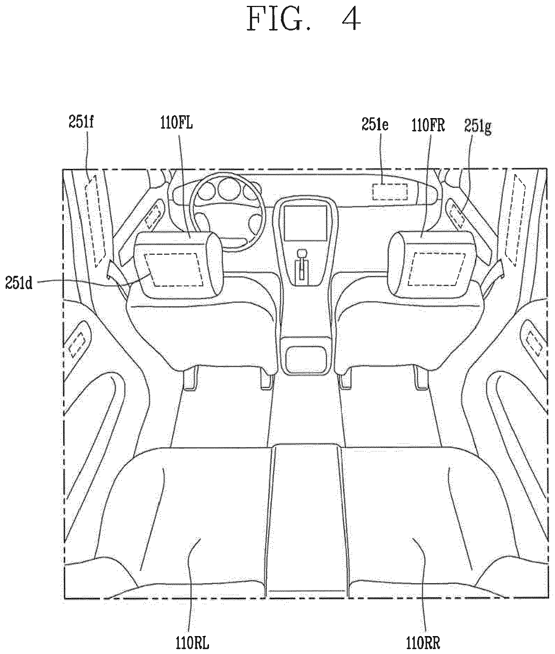

FIGS. 3 and 4 are views illustrating an inside of a vehicle in accordance with an embodiment of the present invention.

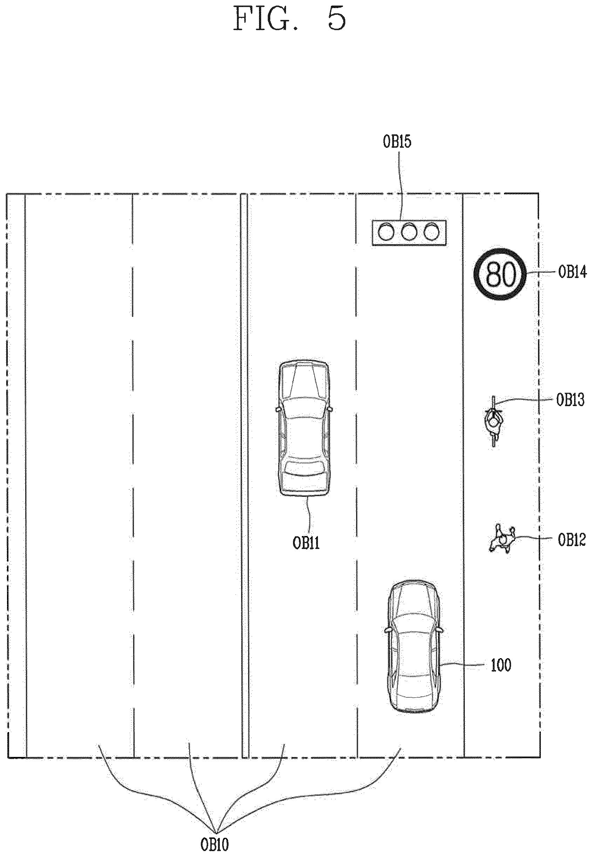

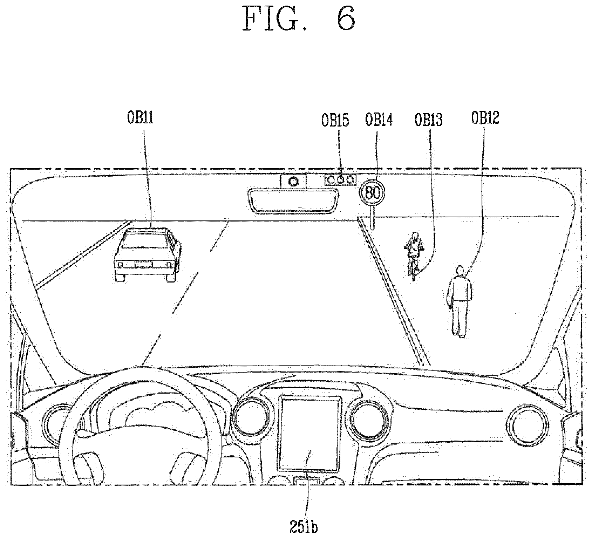

FIGS. 5 and 6 are reference views illustrating objects in accordance with an embodiment of the present invention.

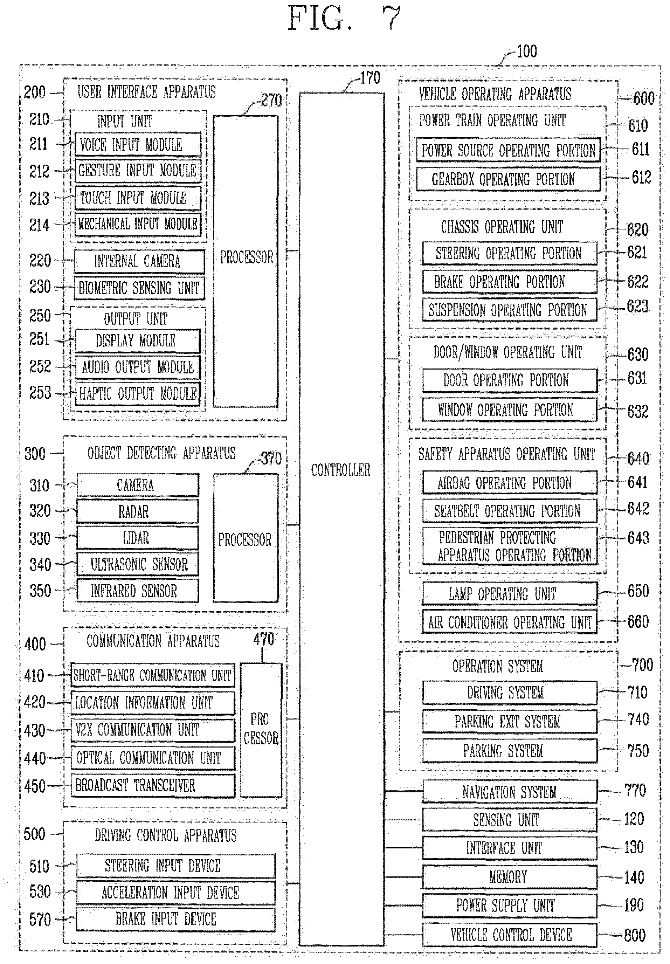

FIG. 7 is a block diagram illustrating a vehicle in accordance with an embodiment of the present invention.

As illustrated in FIG. 1 to 7, a vehicle 100 including a vehicle control device of the present invention may include wheels turning by a driving force, and a steering apparatus 510 for adjusting a driving (ongoing, moving) direction of the vehicle 100.

The vehicle 100 is an autonomous vehicle.

The vehicle 100 may be switched into an autonomous mode or a manual mode based on a user input.

For example, the vehicle may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous module into the manual mode based on driving environment information generated in the object detecting apparatus 300.

In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus 200, an object detecting apparatus 300, a communication apparatus 400, a driving control apparatus 500, a vehicle operating apparatus 600, a operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 200 may implement user interfaces (UIs) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB13 may refer to a vehicle (transportation facility) that is located near the vehicle 100 and moves using two wheels. The two-wheeled vehicle OB13 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

Light may be light generated from a lamp provided in another vehicle, light generated from a street lamp, or solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure, for example.

The object detecting apparatus 300 may include a camera 310, a radar 320, a LiDAR 330, an ultrasonic sensor 340, an infrared sensor 350 and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communication with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, a light-emitting unit may be integrally formed with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

Meanwhile, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include a processor.

According to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

Meanwhile, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the vehicle 100 according to the present invention includes a vehicle control device 800.

The vehicle control device 800 may control at least one of those components illustrated in FIG. 7. From this perspective, the vehicle control device 800 may be the controller 170.

Without a limit to this, the vehicle control device 800 may be a separate device, independent of the controller 170. When the vehicle control device 800 is implemented as a component independent of the controller 170, the vehicle control device 800 may be provided on a part of the vehicle 100.

Hereinafter, description will be given of an example that the vehicle control device 800 is a component separate from the controller 170 for the sake of explanation. In this specification, functions (operations) and control methods described in relation to the vehicle control device 800 may be executed by the controller 170 of the vehicle. That is, every detail described in relation to the vehicle control device 800 may be applied to the controller 170 in the same/like manner.

Also, the vehicle control device 800 described herein may include some of the components illustrated in FIG. 7 and various components included in the vehicle. For the sake of explanation, the components illustrated in FIG. 7 and the various components included in the vehicle will be described with separate names and reference numbers.

Hereinafter, a vehicle control device and method according to the present invention will be described in detail with reference to the accompanying drawings.

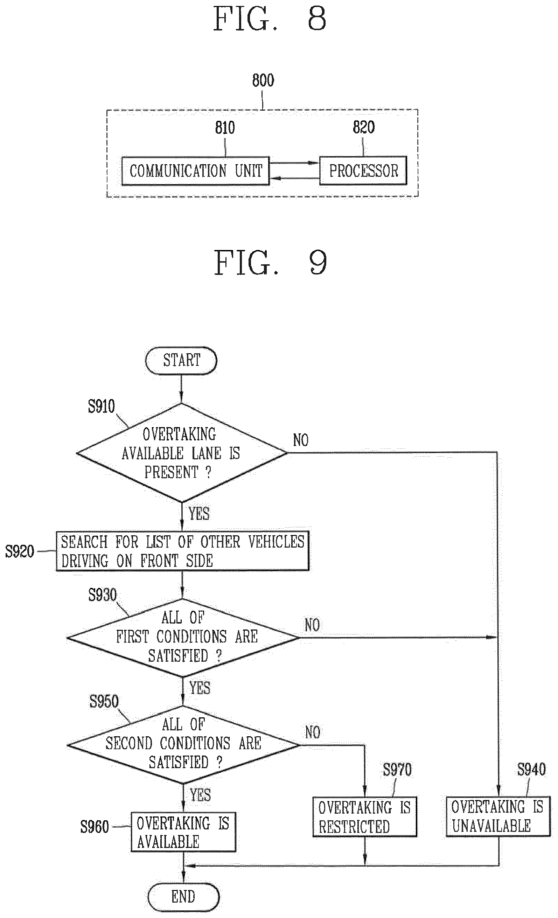

FIG. 8 is a block diagram for explaining a vehicle control device according to the present invention.

Referring to FIG. 8, a vehicle control device 800 according to the present invention is a device for controlling a vehicle having a display 251 and includes a communication unit 810 and a processor 820.

The communication unit 810 is configured to perform communication with the various components described in FIG. 7. For example, the communication unit 810 may receive various information provided through a controller area network (CAN).

In another example, the communication unit 810 may perform communication with all devices which can communicate with other, such as a mobile terminal, a server, and another vehicle. This may be referred to as V2X (Vehicle to everything) communication. V2X communication may be defined as a technology that exchanges information such as traffic situation while communicating with road infrastructure and other vehicles while driving.

Vehicle to vehicle (V2V) communication may be understood as an example of V2X communication or as a concept included in V2X communication. That is, the communication unit 810 may perform communication with the nearby vehicle (or another vehicle). This may be named V2V communication. V2V communication may be generally defined a technique for exchanging information among vehicles and it is possible to share a position, speed information, and the like, of a nearby vehicle.

In addition, the communication unit 810 is configured to receive vehicle driving information.

The vehicle driving information includes vehicle information and surrounding information of the vehicle. With respect to a frame of the vehicle 100, information related to the inside of the vehicle may be defined as vehicle information and the information related with the outside of the vehicle may be defined as the surrounding information.

The vehicle information refers to information about the vehicle itself 100. For example, vehicle information may include a driving speed of a vehicle, a driving direction, acceleration, an angular velocity, a position (GPS), a weight, the number of occupants in a vehicle, braking power of a vehicle, maximum braking power of a vehicle, air pressure of each wheel, centrifugal force applied to a vehicle, a driving mode of a vehicle (whether the vehicle is in an autonomous driving mode or a manual driving mode), a parking mode of a vehicle (autonomous parking mode, automatic parking mode, manual parking mode), whether a user is present in a vehicle, information related to a user, and the like.

The surrounding information refers to information on another object positioned within a predetermined range based on a vehicle and information related to the outside of a vehicle. For example, the surrounding information may be a state (frictional force) of a road surface on which the vehicle is driving, weather, a distance to a preceding vehicle (or subsequent vehicle), a relative speed of a preceding vehicle (or a subsequent vehicle), a bending rate of a curve when a lane in which the vehicle is driving is a curve, brightness near the vehicle, information related to an object present within a reference area (predetermined area) with respect to the vehicle, whether an object enters/leaves the predetermined area, whether a user is present in the vicinity of the vehicle, information related to the user (e.g., whether the user is an authenticated user or not), and the like.

Also, the surrounding information may include ambient brightness, temperature, a location of the sun, information of an object positioned nearby (person, another vehicle, a sign, etc.), a type of a road surface on which the vehicle is driving, a geographic feature, line information, or lane information in which the vehicle is driving, and information required for autonomous driving/autonomous parking/automatic parking/manual parking mode.

Also, the surrounding information may further include a distance between an object present in the vicinity of the vehicle 100 and the vehicle 100, a possibility of collision, a type of the object, a parking space in which the vehicle may park, an object (e.g., a parking line, a string, another vehicle, a wall, etc.) for identifying the parking space, and the like.

As a specific example, the surrounding information may further include nearby traffic situation information, event information such as an accident occurrence/construction area, and the like.

The vehicle driving information is not limited to the example described above and may include all information generated from the components provided in the vehicle 100.

If a predetermined condition is met, the processor 820 is configured to calculate whether or not the vehicle 100 may overtake another vehicle existing within a predetermined range in relation to the vehicle 100, based on the vehicle driving information.

For example, in consideration of lane information within a predetermined distance based on the vehicle 100, position and speed information of the other vehicle, a distance to the other vehicle, whether lanes may be changed, and the like, the processor 820 may determine whether the vehicle 100 may be able to overtake the other vehicle.

Specifically, the processor 820 may extract an overtaking area within the predetermined range, and control the communication unit 810 to guide the overtaking area through the display 251.

As an embodiment, when the vehicle 100 is able to overtake the other vehicle existing within the predetermined range, the processor 820 is configured to control the communication unit 810 to display a road image corresponding to the predetermined range on the display 251.

In the road image, a first graphic object corresponding to the vehicle 100 and a second graphic object corresponding to the other vehicle are displayed based on a relative distance between the vehicle 100 and the other vehicle .

In another embodiment, the overtaking area (and optionally an overtaking unavailable area or an overtaking restricted area) is displayed in the road area.

The overtaking unavailable area is defined as an area having a high possibility of an accident when the vehicle 100 overtakes the other vehicle.

For example, in case where the distance to the preceding vehicle is narrow or another vehicle cuts in so it is difficult to overtake, a predetermined area (or close to the other vehicle) including the other vehicle may be defined as an overtaking unavailable area. Here, the predetermined area may be a area of a lane in which the other vehicle is driving.

The overtaking restricted area is defined as an area having a possibility of an accident lower than the reference when the vehicle 100 overtakes the other vehicle but the vehicle 100 violates a predetermined restriction condition.

For example, in case where it is possible to overtake but overtaking will violate the speed or lane, the area (close to the other vehicle) including the other vehicle may be defined as the overtaking restricted area. Likewise, the predetermined area may be one area of a lane on which the other vehicle is traveling.

The overtaking available area is defined as an area other than the overtaking unavailable area and the overtaking restricted area, in the predetermined area.

In an embodiment, when the overtaking available area is selected, the processor 820 may generate an autonomous driving command for proceeding overtaking to the overtaking available area.

At this time, a number may be given to each area, and when the driver speaks the corresponding number by voice, the corresponding area may be selected.

FIG. 9 is a flowchart for explaining an embodiment of searching for a nearby vehicle and determining whether or not the vehicle may be passed.

Referring to FIG. 9, first, a step S910 for checking whether there is a lane including overtaking is available is performed.

Accordingly, when there is no overtaking available lane, it is determined that the vehicle cannot overtake (S940) and the procedure is terminated. For example, when the vehicle 100 travels in a one-lane road without a shoulder or when other vehicles run at narrow intervals in the left and right lanes, it may be determined that there is no lane available for overtaking.

Meanwhile, if there is an overtaking available lane, a step S920 of searching for a list of vehicles which run ahead of the vehicle 100 may be performed.

That is, other vehicles within a predetermined range may be searched based on the vehicle 100, and information such as lanes in which the other vehicles are driving, speeds of the other vehicles, and distances between the other vehicles may be collected. Then, the following procedure may be performed on each of the other vehicles.

That is, a step S930 for determining whether preset first conditions are all satisfied for each of the other vehicles is performed.

If any of the first conditions is not met, it is determined that overtaking is not possible (S940) and then the procedure is terminated.

For example, when a distance to the other vehicle is not sufficient to overtake, when the other vehicle approaches the rear side of the vehicle 100 to pass the vehicle 100, or when another vehicle exists in the overtaking available lane before the vehicle 100 overtakes, it is determined that overtaking is not possible (S940) and the procedure is terminated.

Alternatively, when all of the first conditions are satisfied, step S950 is performed to determine whether all of predetermined second conditions are satisfied.

As a result, in the case of another vehicle which satisfies all of the second conditions, it is determined that the vehicle may be passed (S960). Meanwhile, in the case of another vehicle which does not satisfy any of the second conditions, it is determined as a state in which overtaking is restricted (S970).

For example, if the other vehicle is a special vehicle such as an ambulance, a police car, a fire engine, a school bus, or the like, if a speed limit is to be violated to pass the other vehicle, or if another vehicle may be passed when the vehicle 100 should travel on a road in which it is impossible to change lanes, it is determined that the corresponding state is an overtaking restricted state (S97) and the procedure is terminated.

FIG. 9 illustrates a procedure for determining whether the vehicle 100 may be able to overtake, in which whether overtaking available state, overtaking restricted state, and overtaking unavailable state is determined with respect to the other vehicle and a corresponding procedure is terminated.

Then, an overtaking available area (and optionally the overtaking restricted area or overtaking unavailable area) is extracted according to the determination results. Also, as described above, each area may be defined as an area including the corresponding other vehicle or an adjacent area.

Meanwhile, determining as to whether overtaking is available is started when a predetermined condition is satisfied.

As an embodiment, a case where the predetermined condition is satisfied may include a case where a situation of deceleration or acceleration of the vehicle 100 to a predetermined extent is detected. That is, if a situation of decelerating or accelerating to a certain extent is detected, it is considered that the driver has an intention of overtaking and it is determined whether overtaking is available (entering the overtaking mode).

As another example, the case where the predetermined condition is satisfied may include a case where a predetermined input is received by an occupant of the vehicle 100.

Specifically, if an input is applied to a button for setting the overtaking mode (overtaking proceeds after determining whether overtaking is available), it is determined whether overtaking is available.

Meanwhile, as described above, when the vehicle 100 may be able to overtake the other vehicle existing within the predetermined range, the processor 820 is configured to control the communication unit 810 to display a road image corresponding to the predetermined range on the display 251.

In the road image, a first graphic object corresponding to the vehicle 100 and a second graphic object corresponding to the other vehicle are displayed based on a relative distance between the vehicle 100 and the other vehicle .

In another embodiment, the overtaking available area (and optionally the overtaking unavailable area or the overtaking restricted area) is displayed in the road area.

As another example, when the overtaking available area is selected, the processor 820 may generate an autonomous driving command for proceeding with overtaking to the overtaking available area.

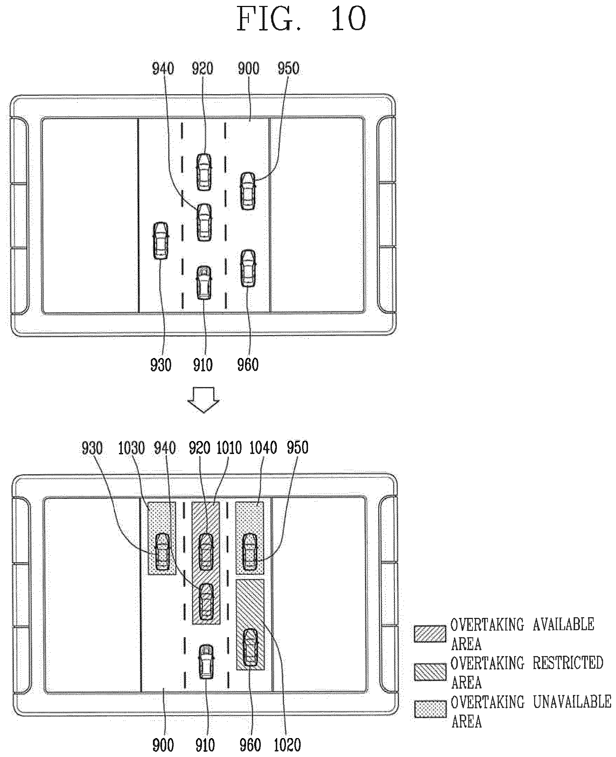

FIG. 10 is a conceptual diagram for explaining an embodiment in which an overtaking available area, an overtaking restricted area and an overtaking unavailable area are displayed.

Referring to FIG. 10, a road image 900 corresponding to a predetermined range based on the vehicle 100 may be output. In this road image 900, a lane on which the vehicle 100 is currently driving and adjacent lanes may be displayed.

Also, icons 910 corresponding to the vehicle 100 and icons 920, 930, 940, 950, and 960 corresponding to the other vehicles may be output on the road image 900.

At this time, the positions to which the icons 910, 920, 930, 940, 950, and 960 are respectively output may be determined according to relative distances between the current vehicle 100 and the other vehicles. To this end, positions of the other vehicles are monitored in real time.

Next, an overtaking available area 1010, an overtaking restricted area 1020, and overtaking unavailable areas 1030 and 1040 calculated on the basis of the vehicle driving information are output on the road image 900.

Each of the areas 1010, 1020, 1030, and 1040 may be displayed in different colors, sizes, shapes, and the like. That is, the overtaking available area 1010, the overtaking restricted area 1020, and the overtaking unavailable areas 103 and 1040 may be displayed to be distinguishable from each other.

Also, the icons 920, 930, 940, 950, and 960 corresponding to the other vehicles may be displayed in different colors, sizes, shapes, or the like, depending on whether they may be passed.

By way of example, the icon 920 of the other vehicle that may be passed, the icons 930, 940, and 950 of other vehicles that may not be passed, and the icon 960 of other vehicle restricted in overtaking may be displayed in different colors.

In another embodiment, when a driver applies a touch input to the overtaking available area 1010, overtaking may proceed to the overtaking available area.

The vehicle may be set to one of a plurality of driving modes, and the processor 820 is configured to control the communication unit 810 so that the overtaking available area is displayed as a different graphic object on the road image according to the set driving mode.

The processor 820 is configured to extract the overtaking available area based on a maximum speed set in the autonomous driving mode when the vehicle 100 is set to the autonomous driving mode.

When the vehicle 100 is set to a manual driving mode, the processor 820 is configured to extract the overtaking available area based on driving pattern information at the time of overtaking regarding the driver of the vehicle

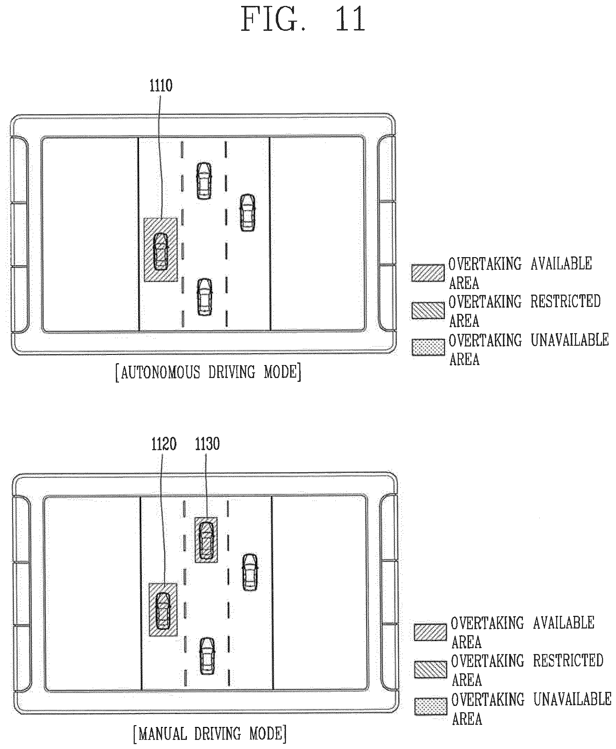

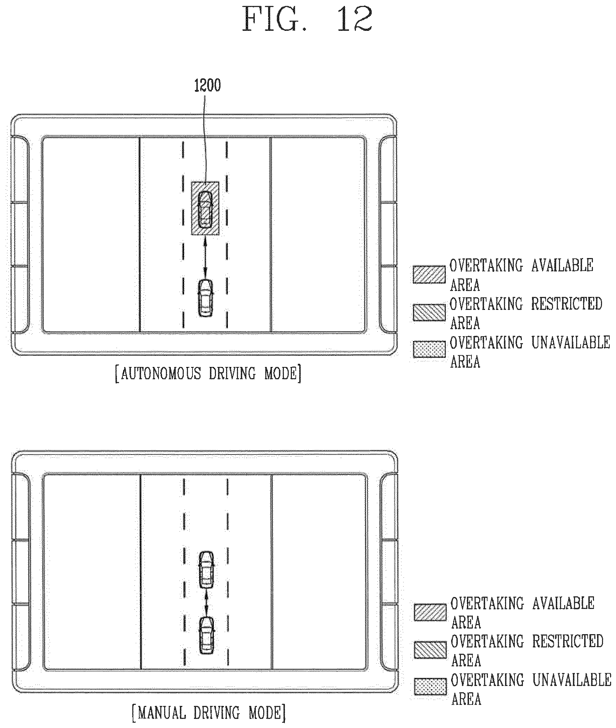

FIGS. 11 and 12 are conceptual diagrams for explaining an embodiment in which the overtaking available areas are displayed to be different according to the driving mode.

Referring to FIG. 11, when the vehicle 100 is set in the autonomous driving mode, the first area 1110 is calculated as the overtaking available area and output. In contrast, when the vehicle 100 is set to the manual driving mode, the third area 1130 together with the second area 1120 are calculated as the overtaking available areas and output.

At this time, the first area 1110 and the second area 1120 include the same vehicle, but they may be displayed in different sizes, shapes, and colors depending on the driving mode.

As an embodiment, when the vehicle 100 is set in the autonomous driving mode, the vehicle 100 must run within the set maximum speed. Due to this speed limit, the vehicle 100 driving in the autonomous driving mode cannot pass other vehicles included in the third area 1130.

In addition, even when the same other vehicle is included, the size of the first area 1110 that may be overtaken in the autonomous driving mode and the second area 1120 that may be overtaken in the manual driving mode are different.

As another example, referring to FIG. 12, the predetermined area 1200 calculated as an overtaking available area in the autonomous driving mode may not be calculated as the overtaking available area in the manual driving mode.

As an embodiment, drives of the vehicle 100 may have different driving patterns (driving habits) when overtaking other vehicle. Accordingly, the driving pattern information of the driver of the vehicle 100 at the time of passing is used to calculate the overtaking available area. The driving pattern information may be stored in the memory or received from the server every predetermined period.

Specifically, in case where a distance between vehicles should be secured by a predetermined distance or greater (driving pattern information), an area 1200 including a predetermined other vehicle may be calculated as an overtaking available area in the autonomous driving mode.

Meanwhile, in the manual driving mode, a distance between the vehicles may not be secured by the predetermined distance or greater, and thus, the area 1200 may not be calculated as an overtaking available area.

Meanwhile, as described above, when the overtaking available area is selected, the processor 820 may generate an autonomous driving command for proceeding overtaking to the overtaking available area.

In an embodiment, the processor 820 may control the communication unit 810 to provide guide information for proceeding to overtaking to the overtaking available area through the display 251.

At this time, the guide information may include at least one of an overtaking start point, an overtaking path, an overtaking suggest speed, a movement distance in the case of overtaking, an overtaking start time, time required for overtaking, and an overtaking end point.

As another example, when the vehicle 100 is able to enter the overtaking available area in a first or second direction, the processor 820 may control the communication unit 810 to display a screen for selecting one of first and second directions on the display 251.

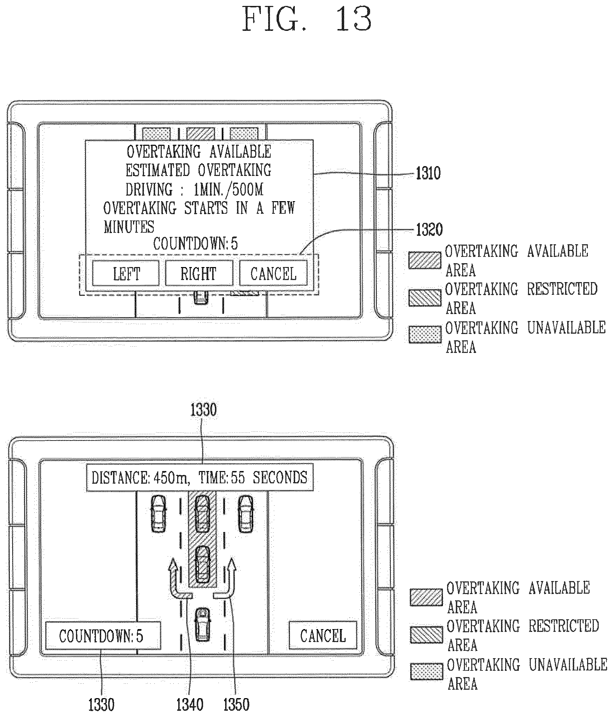

FIG. 13 is a conceptual diagram for explaining an embodiment in which an overtaking available area is selected.

Referring to the upper drawing of FIG. 13 as an embodiment following FIG. 10, when the driver applies a touch input to the overtaking available area 1010, overtaking may proceed to the overtaking area.

As another example, guide information for proceeding overtaking to the overtaking area may be output. In detail, an estimated time and a movement distance for overtaking, a time to start overtaking (a time remaining to start overtaking) 1310, and the like, may be output.

As another example, when it is possible to enter the overtaking available area in the left or right direction, icons 1320 for selecting a direction may be output.

In a related embodiment, if it is set that the driver prefers a left or right lane for overtaking, a highlighting effect may be output to the icon indicating the left or right direction.

As another example, when a touch input is applied to the icon indicating the left direction, overtaking may proceed in the left direction. Similarly, when a touch input is applied to the icon indicating the right direction, overtaking may proceed in the right direction. Meanwhile, if a cancel icon is selected, overtaking progress may be terminated.

As another example, if an overtaking direction is not selected within a remaining time before overtaking starts, overtaking may be started with a preferred lane set in advance.

As another example, if one of the left or right lanes is an overtaking unavailable lane, an icon indicating an overtaking unavailable direction may be displayed in an unselectable state.

As another example, if a turn indicator on the left or right is turned on, overtaking may proceed in the corresponding direction.

As another example, referring to the lower drawing of FIG. 13, an estimated time and a movement distance for overtaking, a time to start overtaking 1330, and the like, may be output. Also, a left arrow icon 1340 and a right arrow icon 1350 indicating overtaking directions may be output.

Similar to the previously described case, if it is set that the driver prefers a left or right lane for overtaking, a highlighting effect may be output to the left or right arrow icon 1340 or 1350.

As another example, when a touch input is applied to the left arrow icon 1340, overtaking may proceed in the left direction. Similarly, when a touch input is applied to the right arrow icon 1350, overtaking may proceed in the right direction. Meanwhile, if a cancel icon is selected, overtaking progress may be terminated.

As another example, if a overtaking direction is not selected within a remaining time before overtaking starts, overtaking may be started with a preferred lane set in advance.

Meanwhile, when the overtaking restricted area is selected, the processor 820 may control the communication unit 810 to display the predetermined restriction condition on the display 251.

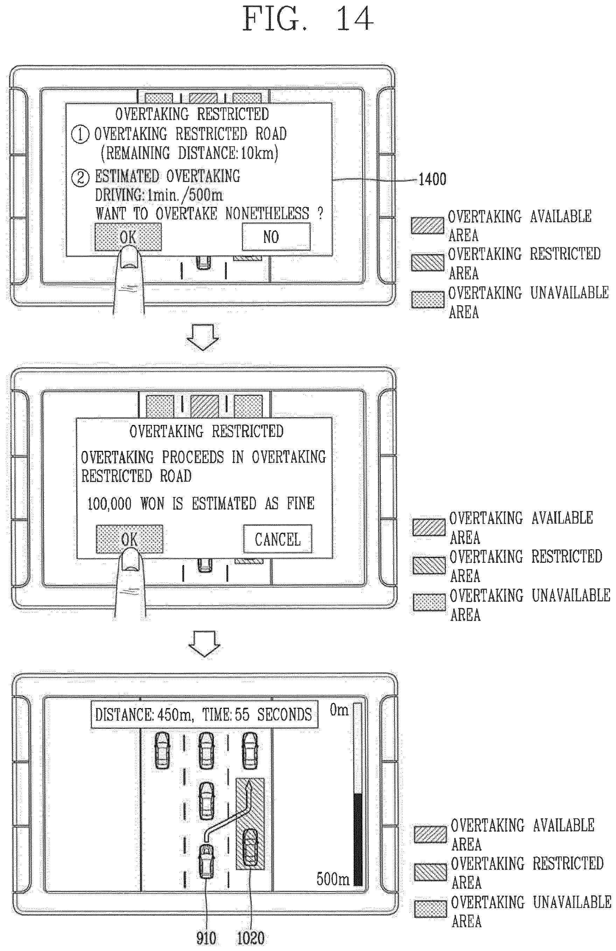

FIG. 14 is a conceptual diagram for explaining an embodiment in which an overtaking restricted area is selected.

Referring to FIG. 14, when the driver inputs a touch input to the overtaking restricted area 1020, reasons for overtaking restriction (predetermined restriction condition 1400) may be displayed. An estimated time and driving distance required for overtaking may also be displayed together.

As an example, a message indicating that it is an overtaking restricted road, a remaining distance 1400, etc. may be displayed.

As another example, a message indicating that overtaking is a speed violation or there is an overspeed regulation camera is present on the front side may be displayed. At this time, a limit speed, anticipated speed at the time of overtaking, a fine, and the like may be displayed together.

In another example, a message indicating that the other vehicle is an overtaking restricted vehicle (such as a military operation vehicle, an ambulance, or a children's school vehicle, etc.), and in the case of overtaking, a message indicating a lane violation such as a violation of a center line or the shoulder may be output.

In the following embodiment, if the "Yes" button is selected after the reason for limiting overtaking 1400 is output, a fine, or the like, caused as overtaking is performed in a road where overtaking is restricted may be displayed.

Then, if "OK" button is selected, overtaking may proceed to the overtaking restricted area 1020. At the time of overtaking, a remaining distance, time, overtaking driving route, and the like, may be displayed on a road image. At this time, a space available in the overtaking lane may be calculated and updated in real time.

Meanwhile, when the overtaking unavailable area is selected, the processor 820 may control the communication unit 810 to display a notification setting screen for receiving a notification when overtaking becomes available in the overtaking unavailable area on the display 251.

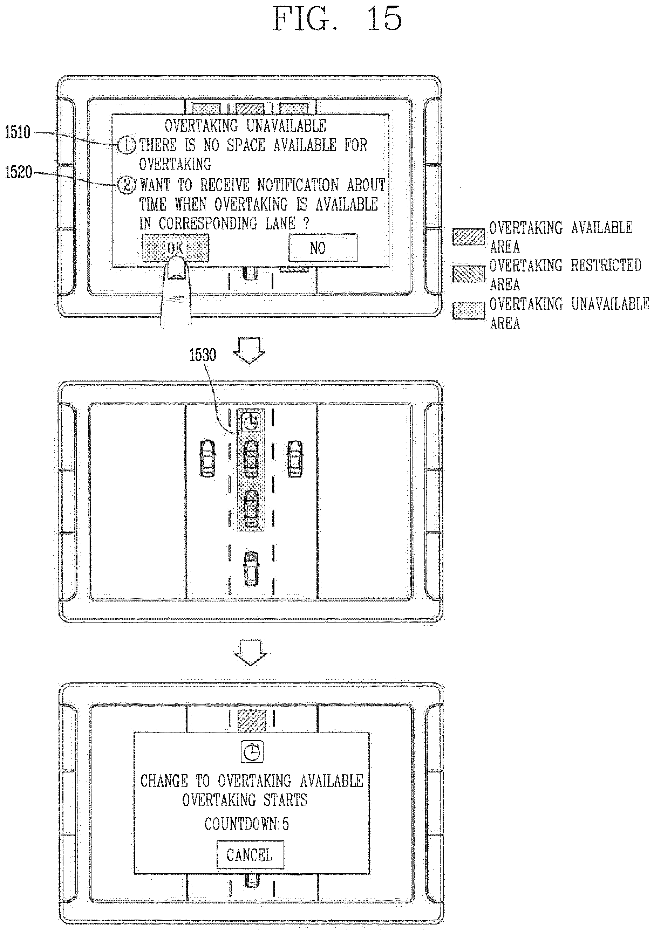

FIG. 15 is a conceptual diagram for explaining an embodiment in case where an overtaking unavailable area is selected.

Referring to FIG. 15, in the case of selecting the overtaking unavailable area, a reason for overtaking unavailability 1510 and a message 1520 asking whether to set a notification may be output.

For example, the reason for overtaking unavailability 1510 may include a case where there is no overtaking available lane, a case where there is no overtaking available space, a case where a distance to the preceding vehicle is narrow, a case where another vehicle which intends to overtake approaches the rear side, and the like.

The message 1520 asking whether to set a notification may be displayed as different contents according to the reason for overtaking unavailability.

For example, when an overtaking available space is generated in a corresponding lane, it may be displayed as different contents according to reasons for overtaking unavailability such as inquiring whether to receive a notification or inquiring whether to receive an overtaking availability notification after a rearward vehicle passes.

In the following embodiment, when a "YES" button is selected, a notification setting is completed and a notification reservation icon 1530 may be displayed on the road image.

Thereafter, when overtaking is available, a message indicating that it is changed to an overtaking available state and overtaking starts may be output. To this end, at the time of notification reservation (setting), an overtaking space may be calculated and updated in real time.

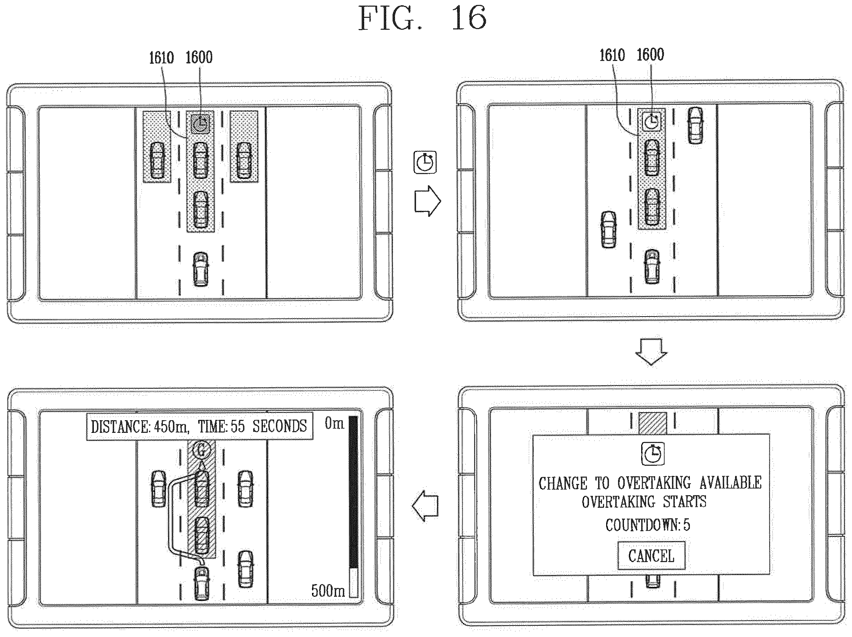

FIG. 16 is a conceptual diagram for explaining an embodiment in which a notification setting screen for receiving a notification is output when overtaking becomes available.

Referring to FIG. 16, a notification reservation icon 1600 may be displayed in the overtaking unavailable area 1610. Accordingly, a notification may be reserved by applying a touch input to the notification reservation icon 1600. In this case, a color, shape, size, etc. of the notification reservation icon 1600 may be changed.

Subsequently, if a state is changed an overtaking available state, a message indicating that it will start overtaking may be output and overtaking may proceed. As described above, in the case of overtaking, a remaining distance, time, an overtaking driving route, etc., may be displayed.

Meanwhile, in the overtaking unavailable area, an object indicating a reason for overtaking unavailability may be displayed.

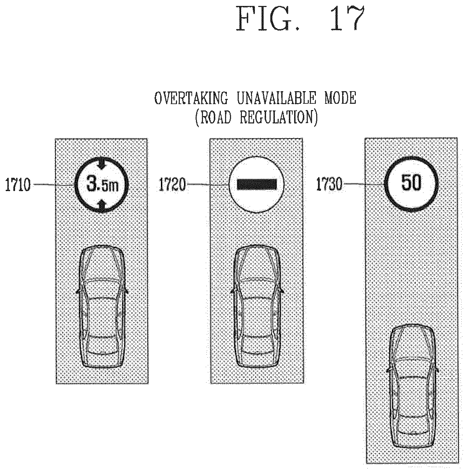

FIG. 17 is a conceptual diagram for explaining an embodiment in which an icon indicating a reason for overtaking unavailability is displayed.

Referring to FIG. 17, an icon 1710 for limiting a height of a vehicle, an entry inhibition icon 1720, an icon 1730 indicating a maximum limit speed, and the like, may be output to an overtaking unavailability area.

As another example, an icon indicating various regulation details may be output. Specifically, icons such as no passing, no car passing, no motor truck passing, no two-wheel car passing, no straight passing, no right turn, no left turn, no U-turn, no U-turn, no overtaking, no parking and stopping, car weight limit, car breath limit, securing a distance between vehicles, a minimum speed limit, slow down, stop, yield, no pedestrians, and the like, may be output.

As another example, an icon indicating a reason for limiting overtaking may be displayed in an overtaking restricted area as well. In some cases, the same icon may also be output in the overtaking unavailable area or the overtaking restricted area.

That is, an icon indicating a maximum speed limit may be output in an overtaking unavailable area where a risk of an accident is high and the maximum limit speed is regulated. In addition, an icon indicating the maximum speed limit may be output in the overtaking restricted area where a risk of an accident is low but the maximum limit speed is regulated.

Meanwhile, when a specific situation in which overtaking is impossible occurs as the vehicle 100 changes its lane from a second lane to a first lane to enter the overtaking available area, the processor 820 may generate a control command for the vehicle 100 to return to the second lane.

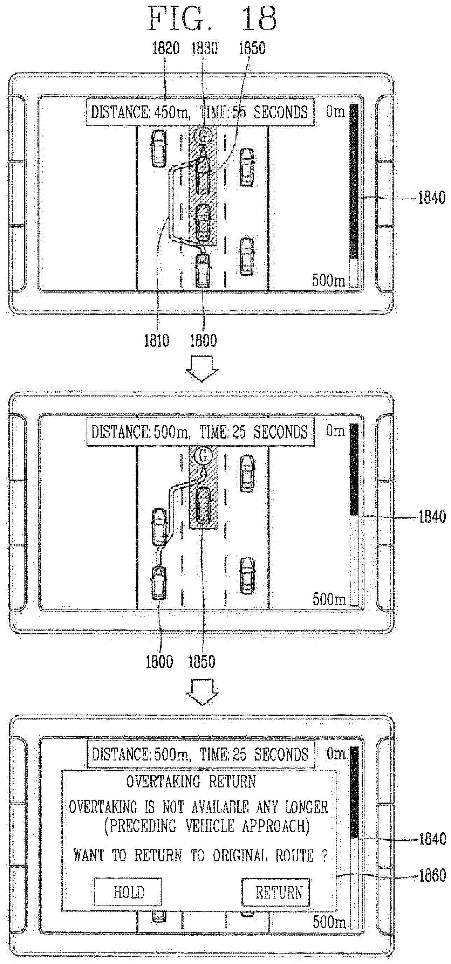

FIG. 18 is a conceptual diagram for explaining an embodiment in which a reason for overtaking unavailability occurs during overtaking.

Referring to FIG. 18, when the vehicle 100 starts to overtake, an icon 1800 corresponding to the vehicle 100, an overtaking driving route 1810, a remaining distance and time 1820, a final destination 1830, an icon 1850 corresponding to another vehicle to be passed, and the like, may be displayed on the road image.

Also, a progress bar 1840 indicating a remaining distance may be displayed. For example, in the progress bar 1840, a whole distance to be moved is indicated by a scale, and the amount of scale is reduced as the vehicle 100 travels.

As the vehicle 100 travels (as time elapses), a remaining distance and time, a location of the vehicle 100, a location of other nearby vehicles, the scale displayed on the bar 1840, and the like, are changed. That is, each value may be updated in real time.

For example, as the vehicle 100 travels, the remaining distance and time are reduced. Further, as the vehicle 100 changes lanes, the location at which the icon 1800 corresponding to the vehicle 100 is output may also be changed. The extent of the overtaking available area and the overtaking driving route may also be changed.

If a situation in which overtaking is impossible continues for a predetermined time during overtaking driving of the vehicle 100, a control command may be generated for the vehicle 100 to return to the previous location (lane, driving route).

As an embodiment, when the vehicle 100 changes lanes for overtaking, if a specific situation occurs in which overtaking is impossible, a control command for the vehicle 100 to return to the original lane may be generated.

As another embodiment, when a situation in which overtaking is impossible continues for a predetermined time, a message window 1860 asking whether to return to the original route may be output together with a reason for overtaking unavailability (such as a vehicle approaches on a front side, etc.)

In response, when a "keep" button is selected, the overtaking available state continues to be updated. As a result, when overtaking is possible after the lapse of a predetermined time, overtaking may be restarted. If overtaking is still impossible even after the lapse of the predetermined time, a message window 1860 asking whether to return to the original route may be output.

When a "return" button is selected, overtaking may be terminated. In addition, when the lanes have been changed, the vehicle may be returned to the original lane.

As another embodiment, one overtaking area may be divided into two or more areas during overtaking. In this case, it is possible to select an overtaking area farthest from the vehicle 100. Also, a message asking whether to select a near overtaking available area may be output.

Meanwhile, when another vehicle to pass the vehicle 100 is detected, the processor 820 may control the communication unit 810 to guide an estimated driving route of the other vehicle through the display 251.

At this time, the processor 820 may generate a control command for restricting movement of the vehicle 100 so as not to overlap the estimated driving route of the other vehicle.

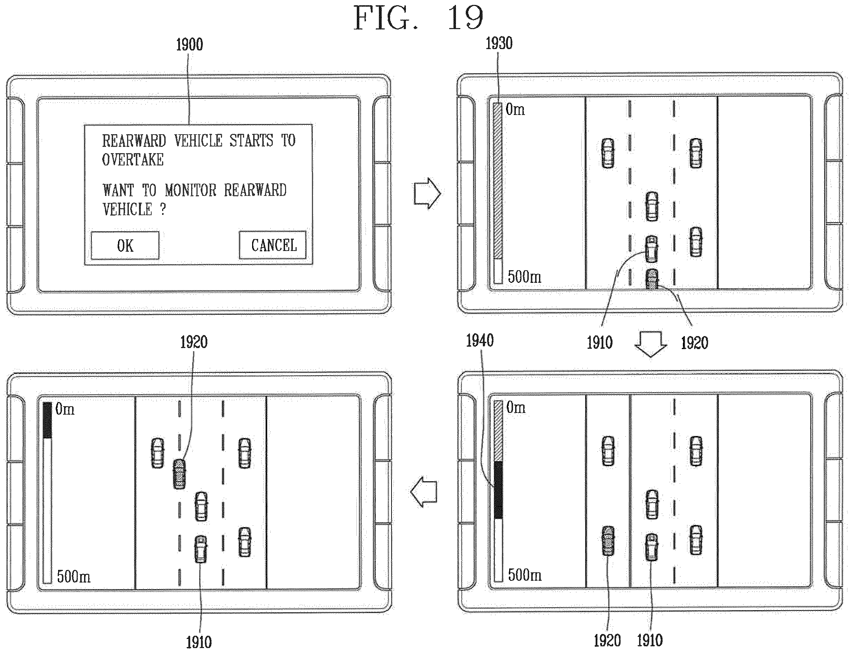

FIG. 19 is a conceptual diagram for explaining an embodiment in which another vehicle attempting to overtake approaches.

Referring to FIG. 19, when a rearward vehicle that attempts to pass the vehicle 100 is detected, a message 1900 asking whether to monitor the rearward vehicle may be output.

In response to this, when the "OK" button is pressed, a first icon 1910 corresponding to the vehicle 100 and a second icon 1920 corresponding to the rearward vehicle which is overtaking may be output on the road image.

A progress bar 1930 for indicating the progress of overtaking of the other vehicle may also be output. For example, in the progress bar 1930, a remaining distance until the other vehicle overtakes may be indicated by a scale.

Then, when the other vehicle approaches within a predetermined distance for overtaking or if the other vehicle changes lanes, it may be displayed in various ways that lane change is not possible. For example, a color or thickness of the lane impossible to change may be displayed to be different or a highlighting effect may be output on the lane impossible to change.

As another example, a remaining distance 1940 during a time when a lane change is not possible may be displayed on the progress bar 1930. Specifically, the other vehicle may change to the first lane and then enter the second lane again for overtaking. At this time, while the other vehicle is in the first lane, entry of the vehicle 100 into the first lane may be restricted.

Thus, while the other vehicle is in the first lane, a control command for movement restriction that prevents the vehicle 100 from entering the first lane may be generated. In addition, a remaining distance 1940 while the other vehicle is driving in the first lane may be displayed on the progress bar 1930.

Meanwhile, the processor 820 may extract a driving route to the overtaking available area in consideration of conditions set by the driver of the vehicle 100 in advance.

The user (driver) may directly set various values required for overtaking through the display 251 disposed in the vehicle or the mobile terminal.

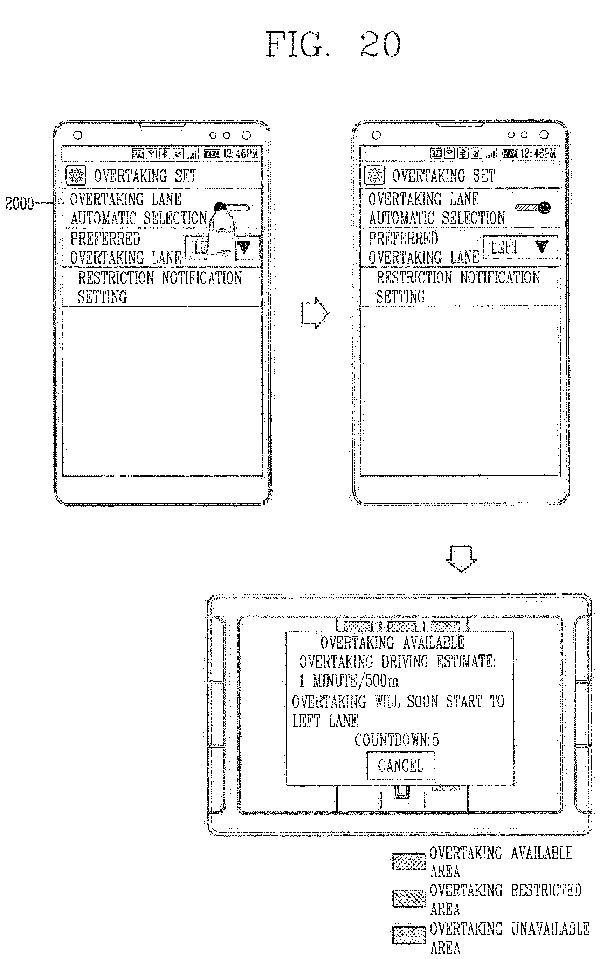

FIGS. 20 to 22 are conceptual diagrams for explaining an embodiment in which a value for overtaking driving is set in advance.

Referring to FIG. 20, a menu 2000 for automatically selecting an overtaking lane may be output in an overtaking setting menu. In the automatic selection of the overtaking lane, an OFF value may be set as a default value.

Thereafter, when the user applies a predetermined touch input, the value may be changed to an ON state. Accordingly, at the time of overtaking, it is possible to automatically select which lane to overtake.

As an embodiment, in case where overtaking is possible, a screen for selecting an overtaking lane may not be output and a message indicating that overtaking starts to the automatically selected lane may be output.

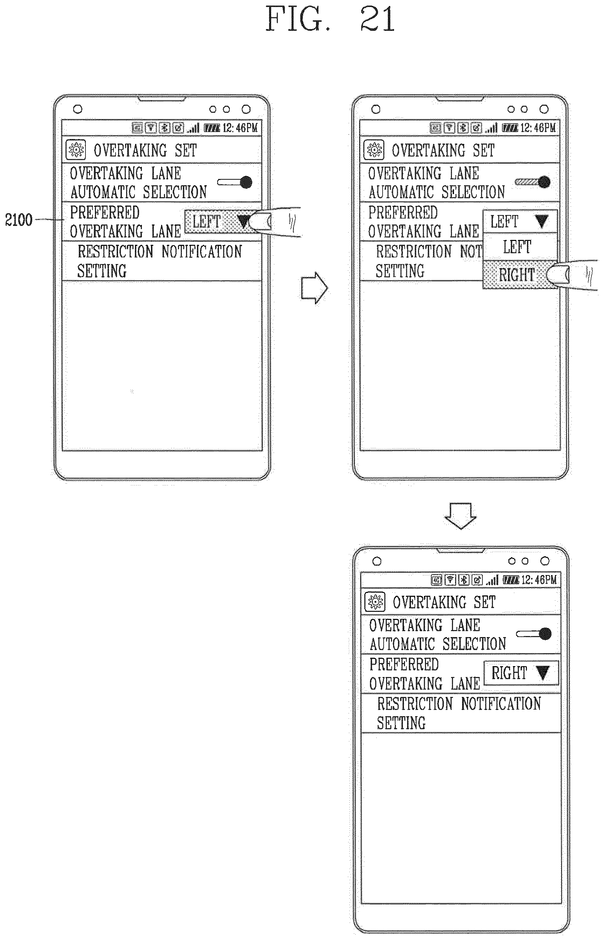

As another embodiment, referring to FIG. 21, a menu 2100 for selecting a preferred overtaking lane may be output in the overtaking setting menu. In the preferred overtaking lane, a left or right value may be set as a default value.

Thereafter, the user may select a preferred overtaking lane to the left or right by applying a predetermined touch input. Accordingly, when both left and right lanes may be used at the time of overtaking, the vehicle may travel to the selected lane.

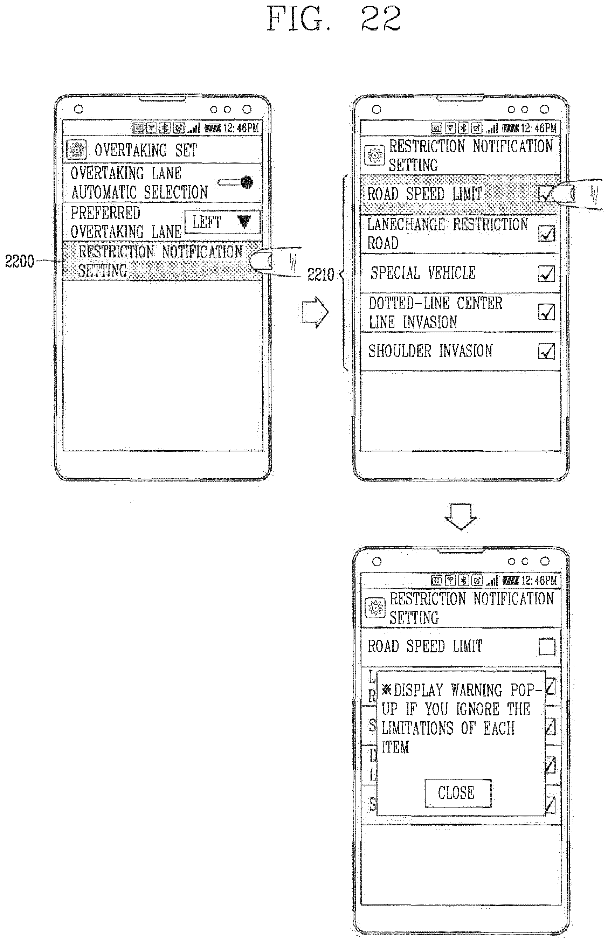

As another example, referring to FIG. 22, a menu 2200 for setting a notification of restrictions may be output in the overtaking setting menu. At this time, for the entire notification, an ON value may be set to as a default value.

For example, items for setting a notification may include a road speed limit, a lane change restriction road, a special vehicle, a dotted-line center line invasion, a shoulder invasion, etc. 2210.

Thereafter, when the user applies a predetermined touch input to the road speed limit item, a notification of the road speed limit may not be output even when there is a speed limit in the driving road.

Effects of the vehicle control device provided in a vehicle and the method for controlling the vehicle according to the present invention will be described as follows.

According to at least one of the embodiments of the present invention, the overtaking available area, the overtaking unavailable area, and the overtaking restricted area are displayed on the road image, so that the possibility of overtaking to a predetermined area may be intuitively checked.

Also, a location of the vehicle, an overtaking travel driving route, a remaining distance, time, etc. during overtaking are updated in real time to display the progress of overtaking.

As another example, the overtaking available area may be calculated and displayed to be different according to driving modes.

In addition, an overtaking method may be specifically set by setting a lane, or the like, preferred by an individual in advance.

As another example, there is an advantage that the progress of overtaking of another vehicle may be checked in real time.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the processor or the controller. Therefore, it should also be understood that the above-described embodiments are not limited by any of the details of the foregoing description, unless otherwise specified, but rather should be construed broadly within its scope as defined in the appended claims.

## Claims

1. A vehicle control device (800) for controlling a vehicle having a display (251), the vehicle control device comprising:
a communication unit (810) receiving vehicle driving information; and
a processor (820) configured to calculate whether the vehicle is able to overtake another vehicle present within a predetermined range in relation to the vehicle on the basis of the vehicle driving information when a predetermined condition is satisfied,
wherein the processor (820) is configured to extract an overtaking available area (1010) within the predetermined range and to control the communication unit to display the overtaking available area through the display (251),
wherein when the vehicle is able to overtake the other vehicle present within the predetermined range,
the processor (820) is configured to control the communication unit (810) to display a road image corresponding to the predetermined range on the display (251), and to display a first graphic object corresponding to the vehicle and a second graphic object corresponding to the other vehicle on the road image on the basis of a distance between the vehicle and the other vehicle,
wherein the vehicle is set to one of a plurality of driving modes,
**characterized in that** the processor (820) is further configured to:
when the vehicle is set in an autonomous driving mode, extract the overtaking available area (1010) on the basis of a maximum speed set in the autonomous driving mode, and
when the vehicle is set to a manual driving mode, extract the overtaking available area (1010) based on driving pattern information associated with a driver of the vehicle at the time of overtaking; and
control the communication unit (810) to display the overtaking available area (1010) in a different graphic object on the road image according to the set driving mode,
wherein the overtaking available area (1010) is an area other than an overtaking unavailable area and an overtaking restricted area, in the predetermined area, and
wherein the overtaking unavailable area is an area having a high possibility of an accident when the vehicle overtakes the other vehicle, and the overtaking restricted area is an area having a possibility of an accident lower than a reference value when the vehicle overtakes the other vehicle but the vehicle violates a predetermined restriction condition.

2. The vehicle control device of claim 1, wherein
when the overtaking available area (1010) is selected, the processor (820) is configured to generate an autonomous driving command to proceed with overtaking in the overtaking available area.

3. The vehicle control device of claim 2, wherein
the processor (820) is configured to control the communication unit (810) to provide guide information for proceeding with overtaking in the overtaking available area (1010) through the display.

4. The vehicle control device of claim 3, wherein
the guide information includes at least one of an overtaking start point, an overtaking path, an overtaking suggest speed, a movement distance in the case of overtaking, an overtaking start time, time required for overtaking, and an overtaking end point.

5. The vehicle control device of claim 2, wherein
when the vehicle is able to enter the overtaking available area (1010) in a first or second direction, the processor (820) is configured to control the communication unit (810) to display a screen for selecting one of first and second directions on the display (251).

6. The vehicle control device of claim 2, wherein
when a specific situation in which overtaking is impossible occurs as the vehicle changes its lane from a second lane to a first lane to enter the overtaking available area, the processor (820) is configured to generate a control command for the vehicle to return to the second lane.

7. The vehicle control device of claim 1, wherein
when another vehicle to overtake the vehicle is detected, the processor (820) is configured to control the communication unit to display an estimated driving route of the other vehicle through the display (251).

8. The vehicle control device of claim 7, wherein
the processor (820) is configured to generate a control command for restricting movement of the vehicle so as not to overlap the estimated driving route of the other vehicle.

9. The vehicle control device of claim 1, wherein
a case where the predetermined condition is satisfied includes a case where a situation of deceleration or acceleration of the vehicle to a predetermined extent is detected,
and/or wherein
the case where the predetermined condition is satisfied includes a case where a predetermined input is received by an occupant of the vehicle
and/or wherein
the processor (820) is configured to extract a driving route to the overtaking available area (1010) in consideration of conditions set by the driver of the vehicle in advance.

10. A method for controlling a vehicle having a display, the method comprising:
receiving vehicle driving information;
calculating whether the vehicle is able to overtake another vehicle present within a predetermined range in relation to the vehicle on the basis of the vehicle driving information when a predetermined condition is satisfied,
wherein the calculating whether the vehicle is able to overtake the other vehicle includes extracting an overtaking available area from the predetermined range and displaying the overtaking available area through the display, and
displaying a road image corresponding to the predetermined range on the display and displaying a first graphic object corresponding to the vehicle and a second graphic object corresponding to the other vehicle on the road image on the basis of a distance between the vehicle and the other vehicle, when the vehicle is able to overtake the other vehicle present within the predetermined range,
wherein the vehicle is set to one of a plurality of driving modes,
**characterized in that** the method further includes:
when the vehicle is set in an autonomous driving mode, extracting the overtaking available area on the basis of a maximum speed set in the autonomous driving mode,
when the vehicle is set to a manual driving mode, extracting the overtaking available area based on driving pattern information associated with a driver of the vehicle at the time of overtaking; and
displaying the overtaking available area in a different graphic object on the road image according to the set driving mode,
wherein the overtaking available area is an area other than an overtaking unavailable area and an overtaking restricted area, in the predetermined area, and
wherein the overtaking unavailable area is an area having a high possibility of an accident when the vehicle overtakes the other vehicle, and the overtaking restricted area is an area having a possibility of an accident lower than a reference value when the vehicle overtakes the other vehicle but the vehicle violates a predetermined restriction condition.

## Patentansprüche

1. Fahrzeugsteuerungsvorrichtung (800) zur Steuerung eines Fahrzeugs mit einer Anzeige (251), wobei die Fahrzeugsteuerungsvorrichtung aufweist:
eine Kommunikationseinheit (810), die Fahrzeugfahrinformationen empfängt; und
einen Prozessor (820), der dazu konfiguriert ist, auf der Grundlage der Fahrzeugfahrinformationen zu berechnen, ob das Fahrzeug dazu in der Lage ist, ein anderes Fahrzeug zu überholen, das sich innerhalb eines vorbestimmten Bereichs in Bezug auf das Fahrzeug befindet, wenn eine vorbestimmte Bedingung erfüllt ist,
wobei der Prozessor (820) dazu konfiguriert ist, einen verfügbaren Überholbereich (1010) innerhalb des vorbestimmten Bereichs zu extrahieren und die Kommunikationseinheit dazu zu steuern, den verfügbaren Überholbereich mittels der Anzeige (251) anzuzeigen,
wobei dann, wenn das Fahrzeug dazu in der Lage ist, das sich innerhalb des vorbestimmten Bereichs befindende andere Fahrzeug zu überholen,
der Prozessor (820) dazu konfiguriert ist, die Kommunikationseinheit (810) so zu steuern, dass ein dem vorbestimmten Bereich entsprechendes Straßenbild auf der Anzeige (251) angezeigt wird, und dass ein dem Fahrzeug entsprechendes erstes grafisches Objekt und ein dem anderen Fahrzeug entsprechendes zweites grafisches Objekt auf dem Straßenbild auf der Grundlage eines Abstands zwischen dem Fahrzeug und dem anderen Fahrzeug angezeigt werden,
wobei das Fahrzeug auf einen einer Mehrzahl von Fahrmodi eingestellt ist,
**dadurch gekennzeichnet, dass** der Prozessor (820) ferner konfiguriert ist zum:
Extrahieren, wenn das Fahrzeug auf einen autonomen Fahrmodus eingestellt ist, des verfügbaren Überholbereichs (1010) auf der Grundlage einer im autonomen Fahrmodus eingestellten Höchstgeschwindigkeit, und
Extrahieren, wenn das Fahrzeug auf einen manuellen Fahrmodus eingestellt ist, des verfügbaren Überholbereichs (1010) auf der Grundlage von Fahrmusterinformationen, die zum Zeitpunkt des Überholens einem Fahrer des Fahrzeugs zugeordnet sind; und
Steuern der Kommunikationseinheit (810) zum Anzeigen des verfügbaren Überholbereichs (1010) auf dem Straßenbild in einem anderen grafischen Objekt gemäß dem eingestellten Fahrmodus,
wobei in dem vorbestimmten Bereich der verfügbare Überholbereich (1010) ein anderer Bereich als ein nicht verfügbarer Überholbereich und ein überholbeschränkter Bereich ist, und
wobei der nicht verfügbare Überholbereich ein Bereich ist, der eine hohe Unfallwahrscheinlichkeit aufweist, wenn das Fahrzeug das andere Fahrzeug überholt, und der überholbeschränkte Bereich ein Bereich ist, der eine Unfallwahrscheinlichkeit aufweist, die kleiner als ein Referenzwert ist, wenn das Fahrzeug das andere Fahrzeug überholt, wobei das Fahrzeug jedoch eine vorgegebene Beschränkungsbedingung verletzt.

2. Fahrzeugsteuerungsvorrichtung nach Anspruch 1, wobei dann,
wenn der verfügbare Überholbereich (1010) ausgewählt wird, der Prozessor (820) dazu konfiguriert ist, einen autonomen Fahrbefehl zum Fortsetzen des Überholens in dem verfügbaren Überholbereich zu erzeugen.

3. Fahrzeugsteuerungsvorrichtung nach Anspruch 2, wobei der Prozessor (820) dazu konfiguriert ist, die Kommunikationseinheit (810) so zu steuern, dass sie über die Anzeige Leitinformationen für das Fortsetzen des Überholvorgangs in dem verfügbaren Überholbereich (1010) bereitstellt.

4. Fahrzeugsteuerungsvorrichtung nach Anspruch 3, wobei
die Leitinformation mindestens eines aus einem Überholstartpunkt, einem Überholweg, einer vorgeschlagenen Überholgeschwindigkeit, einer Bewegungsstrecke im Falle eines Überholens, einer Überholstartzeit, einer zum Überholen benötigten Zeit und einem Überholendpunkt enthält.

5. Fahrzeugsteuerungsvorrichtung nach Anspruch 2, wobei dann,
wenn das Fahrzeug in den verfügbaren Überholbereich (1010) in einer ersten oder zweiten Richtung einfahren kann, der Prozessor (820) dazu konfiguriert ist, die Kommunikationseinheit (810) so zu steuern, dass auf der Anzeige (251) ein Bildschirm zur Auswahl einer der ersten und zweiten Richtungen angezeigt wird.

6. Fahrzeugsteuerungsvorrichtung nach Anspruch 2, wobei dann,
wenn eine bestimmte Situation auftritt, in der ein Überholen unmöglich ist, wenn das Fahrzeug seine Fahrbahn von einer zweiten Fahrspur auf eine erste Fahrspur wechselt, um in den verfügbaren Überholbereich einzufahren, der Prozessor (820) dazu konfiguriert ist, einen Steuerbefehl für das Fahrzeug zu erzeugen, um auf die zweite Fahrspur zurückzukehren.

7. Fahrzeugsteuerungsvorrichtung nach Anspruch 1, wobei dann,
wenn ein anderes das Fahrzeug überholende Fahrzeug erkannt wird, der Prozessor (820) dazu konfiguriert ist, die Kommunikationseinheit dazu zu steuern, eine geschätzte Fahrstrecke des anderen Fahrzeugs mittels der Anzeige (251) anzuzeigen.

8. Fahrzeugsteuerungsvorrichtung nach Anspruch 7, wobei der Prozessor (820) dazu konfiguriert ist, einen Steuerbefehl zur Einschränkung der Bewegung des Fahrzeugs zu erzeugen, um die geschätzte Fahrstrecke des anderen Fahrzeugs nicht zu überlappen.

9. Fahrzeugsteuerungsvorrichtung nach Anspruch 1, wobei
ein Fall, in dem die vorbestimmte Bedingung erfüllt ist, einen Fall enthält, in dem eine Situation der Verlangsamung oder Beschleunigung des Fahrzeugs auf ein vorbestimmtes Ausmaß erfasst wird,
und/oder wobei
der Fall, in dem die vorbestimmte Bedingung erfüllt ist, einen Fall enthält, in dem eine vorbestimmte Eingabe von einem Insassen des Fahrzeugs empfangen wird
und/oder wobei
der Prozessor (820) dazu konfiguriert ist, eine Fahrtroute zu dem verfügbaren Überholbereich (1010) unter Berücksichtigung von Bedingungen zu extrahieren, die von dem Fahrer des Fahrzeugs im Voraus eingestellt wurden.

10. Verfahren zur Steuerung eines Fahrzeugs, das eine Anzeige aufweist, wobei das Verfahren umfasst:
Empfangen von Fahrzeugfahrinformationen;
Berechnen, ob das Fahrzeug dazu in der Lage ist, ein anderes Fahrzeug zu überholen, das sich innerhalb eines vorbestimmten Bereichs in Bezug auf das Fahrzeug befindet, auf der Grundlage der Fahrzeugfahrinformationen, wenn eine vorbestimmte Bedingung erfüllt ist,
wobei das Berechnen, ob das Fahrzeug dazu in der Lage ist, das andere Fahrzeug zu überholen, ein Extrahieren eines verfügbaren Überholbereichs aus dem vorbestimmten Bereich und ein Anzeigen des verfügbaren Überholbereichs mittels der Anzeige enthält, und
Anzeigen eines dem vorbestimmten Bereich entsprechenden Straßenbildes auf der Anzeige und Anzeigen eines dem Fahrzeug entsprechenden ersten grafischen Objekts und eines dem anderen Fahrzeug entsprechenden zweiten grafischen Objekts auf dem Straßenbild auf der Grundlage eines Abstands zwischen dem Fahrzeug und dem anderen Fahrzeug, wenn das Fahrzeug dazu in der Lage ist, das sich innerhalb des vorbestimmten Bereichs befindende andere Fahrzeug zu überholen,
wobei das Fahrzeug auf einen einer Mehrzahl von Fahrmodi eingestellt wird,
**dadurch gekennzeichnet, dass** das Verfahren ferner umfasst:
wenn das Fahrzeug auf einen autonomen Fahrmodus eingestellt ist, Extrahieren des verfügbaren Überholbereichs auf der Grundlage einer im autonomen Fahrmodus eingestellten Höchstgeschwindigkeit,
wenn das Fahrzeug auf einen manuellen Fahrmodus eingestellt ist, Extrahieren des verfügbaren Überholbereichs auf der Grundlage von Fahrmusterinformationen, die zum Zeitpunkt des Überholens einem Fahrer des Fahrzeugs zugeordnet sind; und
Anzeigen des verfügbaren Überholbereichs in einem anderen grafischen Objekt auf dem Straßenbild entsprechend dem eingestellten Fahrmodus,
wobei in dem vorbestimmten Bereich der verfügbare Überholbereich ein anderer Bereich als ein nicht verfügbarer Überholbereich und ein überholbeschränkter Bereich ist, und
wobei der nicht verfügbare Überholbereich ein Bereich ist, der eine hohe Unfallwahrscheinlichkeit aufweist, wenn das Fahrzeug das andere Fahrzeug überholt, und der überholbeschränkte Bereich ein Bereich ist, der eine Unfallwahrscheinlichkeit aufweist, die kleiner als ein Referenzwert ist, wenn das Fahrzeug das andere Fahrzeug überholt, wobei das Fahrzeug jedoch eine vorbestimmte Beschränkungsbedingung verletzt.

## Revendications

1. Dispositif de commande de véhicule (800) pour commander un véhicule ayant un écran (251), le dispositif de commande de véhicule comprenant:
une unité de communication (810) recevoir des informations de conduite de véhicule; et
un processeur (820) configuré pour calculer si le véhicule est apte à dépasser un autre véhicule présent dans un rayon d'action prédéterminé en relation avec le véhicule en fonction des informations de conduite de véhicule lorsqu'une condition prédéterminée est remplie,
dans lequel le processeur (820) est en outre configuré pour extraire une zone disponible de dépassement (1010) dans le rayon d'action prédéterminé et pour amener l'unité de communication à afficher la zone disponible de dépassement via l'écran (251),
dans lequel lorsque le véhicule est apte à dépasser l'autre véhicule présent dans le rayon d'action prédéterminé,
le processeur (820) est configuré pour amener l'unité de communication (810) à afficher une image de route correspondant au rayon d'action prédéterminé sur l'écran (251), et pour afficher un premier objet graphique correspondant au véhicule et un second objet graphique correspondant à l'autre véhicule sur l'image de route sur la base d'une distance entre le véhicule et l'autre véhicule,
dans lequel le véhicule est réglé dans l'un parmi une pluralité de modes de conduite,
**caractérisé en ce que** le processeur (820) est en outre configuré pour:
lorsque le véhicule est réglé dans un mode de conduite autonome, extraire la zone disponible de dépassement (1010) sur la base d'une vitesse maximum définie dans le mode de conduite autonome, et
lorsque le véhicule est réglé dans un mode de conduite manuel, extraire la zone disponible de dépassement (1010) en fonction d'informations de modèle de conduite associées à un conducteur du véhicule au moment du dépassement; et
amener l'unité de communication (810) à afficher la zone disponible de dépassement (1010) dans un objet graphique différent sur l'image de route selon le mode de conduite réglé,
dans lequel la zone disponible de dépassement (1010) est une zone autre qu'une zone non disponible de dépassement et une zone interdite au dépassement, dans la zone prédéterminée, et
dans lequel la zone non disponible de dépassement est une zone ayant une haute possibilité d'accident lorsque le véhicule dépasse l'autre véhicule et la zone interdite au dépassement est une zone ayant une possibilité d'accident inférieur à une valeur de référence lorsque le véhicule dépasse l'autre véhicule mais que le véhicule enfreint une condition d'interdiction prédéterminée.

2. Dispositif de commande de véhicule selon la revendication 1, dans lequel,
lorsque la zone disponible de dépassement (1010) est sélectionnée, le processeur (820) est configuré pour générer une instruction de conduite autonome pour procéder au dépassement dans la zone disponible de dépassement.

3. Dispositif de commande de véhicule selon la revendication 2, dans lequel le processeur (820) est configuré pour amener l'unité de communication (810) à fournir des informations de guidage pour procéder au dépassement dans la zone disponible de dépassement (1010) via l'écran.

4. Dispositif de commande de véhicule selon la revendication 3, dans lequel
les informations de guidage comprennent au moins l'un parmi un point de départ de dépassement, un chemin de dépassement, une vitesse suggérée de dépassement, une distance de déplacement en cas de dépassement, un temps de début de dépassement, un temps nécessaire au dépassement et un point de fin de dépassement.

5. Dispositif de commande de véhicule selon la revendication 2, dans lequel, lorsque le véhicule est apte à entrer dans la zone disponible de dépassement (1010) dans une première ou seconde direction, le processeur (820) est configuré pour amener l'unité de communication (810) à afficher un écran pour sélectionner une parmi la première et la seconde direction sur l'écran (251).

6. Dispositif de commande de véhicule selon la revendication 2, dans lequel
lorsqu'une situation spécifique dans laquelle le dépassement est impossible, se produit alors que le véhicule passe d'une seconde voie à une première voie pour pénétrer dans la zone disponible de dépassement, le processeur (820) est configuré pour générer une instruction de commande qui ordonne au véhicule de retourner dans la seconde voie.

7. Dispositif de commande de véhicule selon la revendication 1, dans lequel lorsqu'un autre véhicule qui dépasse le véhicule est détecté, le processeur (820) est configuré pour amener l'unité de communication à afficher un itinéraire de conduite estimé de l'autre véhicule via l'écran (251).

8. Dispositif de commande de véhicule selon la revendication 7, dans lequel
le processeur (820) est configuré pour générer une instruction de commande pour limiter le déplacement du véhicule de manière à ce qu'il ne vienne pas chevaucher l'itinéraire de conduite estimée de l'autre véhicule

9. Dispositif de commande de véhicule selon la revendication 1, dans lequel
dans le cas où la condition prédéterminée est remplie, celui-ci comprend un cas où une situation de décélération ou d'accélération du véhicule sur une étendue prédéterminée est détectée,
et/ou dans lequel
dans le cas où la condition prédéterminée est remplie, celui-ci comprend un cas où une entrée prédéterminée est reçue par un occupant du véhicule
et/ou dans lequel
le processeur (820) est configuré pour extraire un itinéraire de conduite de la zone disponible de dépassement (1010) en tenant compte des conditions définies à l'avance par le conducteur du véhicule.

10. Procédé de commande d'un véhicule ayant un écran, le procédé consistant à:
recevoir des informations de conduite de véhicule,
calculer si le véhicule est apte à dépasser un autre véhicule présent dans un rayon d'action prédéterminé en relation avec le véhicule en fonction des informations de conduite de véhicule lorsqu'une condition prédéterminée est remplie,
dans lequel le calcul selon lequel le véhicule est apte à dépasser l'autre véhicule consiste à extraire une zone disponible de dépassement du rayon d'action prédéterminé et à afficher la zone disponible de dépassement via l'écran, et
afficher une image de route correspondant au rayon d'action prédéterminé sur l'écran et afficher un premier objet graphique correspondant au véhicule et un second objet graphique correspondant à l'autre véhicule sur l'image de route en fonction d'une distance entre le véhicule et l'autre véhicule, lorsque le véhicule est apte à dépasser l'autre véhicule dans le rayon d'action prédéterminé,
dans lequel le véhicule est réglé dans l'un parmi une pluralité de modes de conduite,
**caractérisé en ce que** le procédé consiste en outre à:
lorsque le véhicule est réglé dans un mode de conduite autonome, extraire la zone disponible de dépassement sur la base d'une vitesse maximum définie dans le mode de conduite autonome, et
lorsque le véhicule est réglé dans un mode de conduite manuel, extraire la zone disponible de dépassement en fonction d'informations de modèle de conduite associées à un conducteur du véhicule au moment du dépassement; et
afficher la zone disponible de dépassement dans un objet graphique différent sur l'image de route selon le mode de conduite réglé,
dans lequel la zone disponible de dépassement est une zone autre qu'une zone non disponible de dépassement et une zone interdite au dépassement, dans la zone prédéterminée, et
dans lequel la zone non disponible de dépassement est une zone ayant une haute possibilité d'accident lorsque le véhicule dépasse l'autre véhicule et la zone interdite au dépassement est une zone ayant une possibilité d'accident inférieur à une valeur de référence lorsque le véhicule dépasse l'autre véhicule mais que le véhicule enfreint une condition d'interdiction prédéterminée.
